# EUROPEAN PATENT APPLICATION

(11) **EP 2 930 070 A1**
(43) Date of publication of application: **14.10.2015**
(21) Application number: 14163910.4
(22) Date of filing: 08.04.2014
(51) Int. Cl.: B60R 25/10, B60R 25/102, B60R 25/30, G08B 13/196, H04N 7/18

(54) **Monitoring system**

(71) Applicant: Application Solutions (Electronics and Vision) Limited, Lewes, East Sussex BN7 2 AQ (GB)
(72) Inventor: Weller, Dave, Lewes, BN8 6DF (GB)
(74) Representative: Büchner, Jörg

(57) **Abstract**

A monitoring system (1) comprising at least one vehicle camera (4) connected to a vehicle camera system (3) of a vehicle (2), wherein said vehicle camera (4) supplies camera images of at least one region of interest (ROI) in the vicinity of said vehicle (2) to said vehicle camera system (3) which is adapted to process the received camera images and to generate a video image if an object is entering the region of interest (ROI).

## Description

The invention relates to a monitoring system and in particular to the use of a vehicle camera system of a vehicle monitoring a region of interest.

Vehicles such as cars or trucks can comprise a vehicle camera system, wherein the vehicle camera system has several cameras mounted at different positions of the vehicle to capture images. The camera images can be used to show the driver the surroundings of the vehicle. For instance, the generated camera images supplied to the video camera system are displayed on a screen at the driver's seat and can support the driver when steering the vehicle during a maneuver such as parking the vehicle in a parking lot.

It has been proposed to use camera images supplied by the vehicle camera system in a vehicular anti-theft system capable of supplying images of a vehicle status. US 2005/0275510 A1 describes a vehicular anti-theft system, wherein cameras mounted at positions inside or outside the vehicle capture images showing a status near a driver's seat and outside surroundings of the vehicle. A control device is coupled to the cameras, wherein the control device comprises a control unit coupled with a sensor that detects whether an abnormal situation occurs with the vehicle and coupled with an alarming unit that is capable of issuing an alarm signal. The control device further comprises a video signal switching unit coupled to the cameras and being controlled by the control unit, wherein the video signal switching unit selects one image to be output from the plurality of cameras. An image transmitting unit is coupled to the video signal switching unit and the control unit, wherein based on the control demands of the control unit the image transmitting unit dials a number of a remote mobile phone and sends the selected camera image to the remote mobile phone.

The conventional vehicular anti-theft system according to the state of the art described in US 2005/0275510 A1 is used to monitor the surroundings of the vehicle and the inside of the vehicle to protect the vehicle from being stolen. The sensor detects an abnormal situation occurring with the vehicle. The sensor can be a vibration sensor, an ultrasonic sensor, an infrared sensor for anti-theft monitoring. The sensor of the anti-theft system of US 2005/0275510 A1 is adapted to detect an abnormal situation, for example someone attempting to steal the vehicle. The control unit simultaneously activates the alarming unit to issue warning signals and does activate the cameras to take pictures. Captured pictures can sequentially be selected by the video signal switching unit and output to the image transmitting unit.

Accordingly, in the conventional vehicular anti-theft system, the cameras are only activated if the sensor checks an abnormal situation. As long as no abnormal situation is detected, the cameras are not activated and remain unused.

Accordingly, it is an object of the present invention to provide a monitoring system which makes use of vehicle cameras of a vehicle camera system in a normal situation of the vehicle for fulfilling additional tasks.

This object is achieved by a monitoring system according to the first aspect of the present invention comprising the features of claim 1.

According to the first aspect, a monitoring system is provided comprising at least one vehicle camera connected to a vehicle camera system of a vehicle, wherein said vehicle camera supplies camera images of at least one region of interest in the vicinity of said vehicle to said vehicle camera system which is adapted to process the received camera images and to generate a video image if it is detected that an object is entering the region of interest on the basis of the processed camera images.

With the monitoring system according to the first aspect of the present invention the vehicle cameras of a vehicle being parked for instance in front of an object such as a house or building generate continuously camera images of a region of interest, ROI, in the vicinity of the vehicle. The vehicle camera system processes the received camera images to detect whether an object has entered the region of interest. This object can be for example a person entering the region of interest. If an object is entering the region of interest, then a video image is generated on the basis of the received camera images. The monitoring system according to the first aspect can be employed as an intruder alarm system for a house or a home located in a region of interest, ROI, in the vicinity of the parking vehicle. Consequently, the monitoring system of the present invention cannot only be used for anti-theft protection of the vehicle itself, but also for anti-theft protection of other entities located in a region of interest close to the vehicle. The detection of an object is done by processing the camera images without needing an additional intrusion sensor.

In a possible embodiment of the monitoring system according to the present invention, the vehicle camera system further generates an alarm signal if it is detected that an object, for instance a moving person, is entering the region of interest or its physical movements or motion shows a suspicious behaviour.

In a still further possible embodiment of the monitoring system according to the first aspect of the present invention, the generated video image and the generated alarm signal is sent by the vehicle camera system to a master device of a user via a wireless link.

In a possible embodiment of the monitoring system according to the present invention, the master device is adapted to control vehicle cameras via the wireless link.

In a possible embodiment of the monitoring system according to the first aspect of the present invention, the master device is adapted to control a viewing angle and/or a zoom level of the vehicle cameras.

In a still further possible embodiment of the monitoring system according to the first aspect of the present invention, the master device is connected to a data network.

In a further possible embodiment of the monitoring system according to the present invention, the vehicle is parked in front of a building located in the region of interest which is monitored by at least one vehicle camera of said vehicle to detect a person entering the region of interest.

In a still further possible embodiment of the monitoring system according to present invention, a horn of said vehicle is activated in response to the generated alarm signal to provide an acoustic alarm.

In a still further possible embodiment of the monitoring system according to the first aspect of the present invention, in response to the generated alarm signal, an alarm message is transmitted to said master device of the user and/or to a terminal of a police station and/or to a terminal of a security station located close to the region of interest.

In a still further possible embodiment of the monitoring system according to the first aspect of the present invention, the alarm message further comprises position data of the current position of the parked vehicle provided by a navigation system of the vehicle.

In a further possible embodiment of the monitoring system according to the first aspect of the present invention, the police station and/or security station closest to the region of interest is selected on the basis of the position data of the parked vehicle and the alarm message is automatically sent at least to a network address of a terminal of the selected closest police station and/or security station.

In a still further possible embodiment of the monitoring system according to the first aspect of the present invention, the transmitted video image comprises real time video data provided by the vehicle camera.

In a still further possible embodiment of the monitoring system according to the first aspect of the present invention, the monitoring system is remotely activated or deactivated via the wireless link by the master device or by a control terminal device of the user or by a police or security station terminal.

The invention further provides according to a second aspect a vehicle comprising a monitoring system according to the first aspect of the present invention.

In a possible embodiment of the vehicle according to the second aspect of the present invention, the vehicle is a car of a private person.

In a still further possible embodiment, the vehicle is a police car or a car of a security service provider.

In a still further possible embodiment, the vehicle is a truck or a bus.

In the following, possible embodiments of the monitoring system of the vehicle according to different aspects of the present invention are described in more detail with reference to the enclosed figures.
- Fig. 1: shows a block diagram for illustrating a possible exemplary embodiment of a monitoring system according to the first aspect of the present invention;
- Figs. 2, 3: illustrate different embodiments of a monitoring system according to the first aspect of the present invention;
- Fig. 4: illustrates the operation of a further possible embodiment of a monitoring system according to the present invention;
- Fig. 5: illustrates a possible application of a monitoring system according to the present invention;
- Fig. 6: shows a schematic diagram for illustrating the operation of the monitoring system shown in Fig. 5.

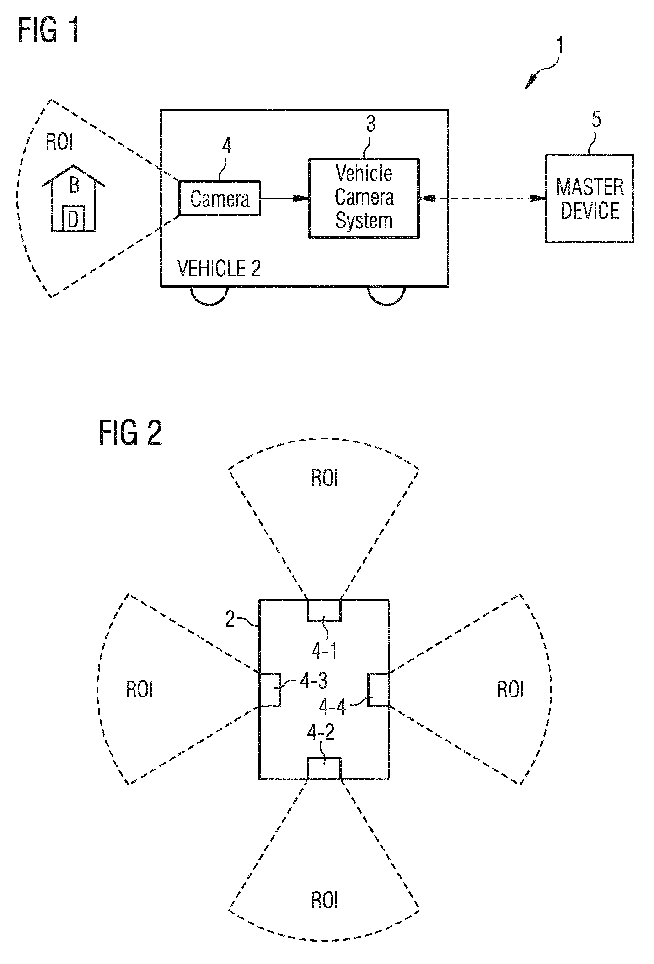

Fig. 1 shows a schematic block diagram for illustrating a possible exemplary embodiment of a monitoring system 1 according to the first aspect of the present invention. As can be seen in Fig. 1, a vehicle 2 comprises a vehicle camera system 3, to which at least one vehicle camera 4 is connected. The vehicle camera 4 supplies camera images of at least one region of interest ROI in the vicinity of the vehicle 2 to the vehicle camera system 3. In the shown schematic diagram, the region of interest ROI is an area where a building B is located having a door D. The vehicle camera 4 supplies continuously or at least periodically camera images of the region of interest ROI to the vehicle camera system 3, which is adapted to process the received camera images.

The vehicle camera system 3 comprises at least one microprocessor or central processing unit evaluating the received camera images to detect automatically a moving object entering the region of interest ROI. The moving object can be for instance a person P approaching the door D of the building B as illustrated in Fig. 1. If a moving object is detected which enters the region of interest ROI, for instance a garden around a building B or an area within the region of interest ROI, for instance approaching a door of a building B, the vehicle camera system 3 processes the received camera images to generate a video image. Accordingly, in the monitoring system 1, as illustrated in Fig. 1, a video image is generated if a suspicious object is detected by processing the received camera images. Accordingly, the monitoring system 1 of the present invention has the advantage that no additional sensors have to be provided to activate the monitoring system 1.

In a possible embodiment also the motion speed and/or movement pattern of an entering person P is evaluated to detect a suspicious behavior of the person such as moving faster than normal or moving slower than normal.

In a possible embodiment any object or person P entering the region of interest is regarded as a suspicious object. In another embodiment only objects which cannot be automatically recognized and/or which show a suspicious motion pattern are regarded as suspicious objects.

If a suspicious object has entered the region of interest ROI, the vehicle camera system 3 generates in a possible embodiment automatically an internal alarm signal to take further action. In a possible embodiment, a horn of the vehicle 2 is activated in response to the generated internal alarm signal to provide an external acoustic alarm to notify persons in the vicinity of the vehicle 2 such as neighbors or pedestrians. In a possible embodiment, the generated video image and the generated alarm signal is sent by the vehicle camera system 3 to a master device 5 via wireless link. The master device 5 is a mobile device such as a smartphone or a laptop which can be carried by a user. The user can be for instance a person owning or renting the building B within the region of interest ROI.

In a possible embodiment, the master device 5 is adapted to control the vehicle cameras 4 via the wireless link. The wireless link can be a link between a transceiver of the vehicle 2 and a base station of an access network which is connected to a backbone data network. In a possible embodiment, the master device 5 has a display for receiving the video images generated by the vehicle camera system 3. In a possible embodiment, the master device 5 is adapted to control for instance a viewing angle and/or a zoom level of one or several vehicles cameras 4 generating the camera images to get a better view on the suspicious moving object entering the region of interest ROI. The user looking at the display of the master device 5 can decide by viewing at the video images, whether the moving suspicious object forms any kind of danger to the monitored entity such as the building B shown in Fig. 1. If the moving object is for instance a person P not known to the user, the entering person might be a thief trying to enter the door D of the building B. If the user, decides by looking at the video image that the entering person P is likely to be a thief, he can activate via the wireless link the horn of the vehicle 2 remotely to provide an acoustic alarm. Accordingly, in a possible implementation, the acoustic alarm is only generated in response to a remote control signal derived from the master device 5. Alternatively, the acoustic alarm is generated automatically in response to the generated internal alarm signal generated by the vehicle camera system 3. The master device 5 can be connected to a data network such as the internet to perform a remote control of the monitoring system 1 illustrated in Fig. 1.

In a possible embodiment, in response to the generated internal alarm signal, an alarm message is transmitted to the master device 5 of the user and the video image is then displayed on the display of the master device 5. In a still further possible embodiment, the alarm message generated by the vehicle camera system 3 is also sent to a terminal of a police station or a security station located close to the region of interest ROI. The alarm message can comprise position data of the current position of the vehicle 2 provided by a navigation system of the vehicle 2. For instance, if the vehicle 2 is parked in front of a building B, the position data coordinates provided by the navigation system are attached to the alarm message and transmitted to a terminal of the police station and/or to a terminal of the security station located closest to the region of interest ROI. It is possible that the police station or security station being closest to the region of interest ROI is selected by a selection unit within the vehicle 2 on the basis of the position data of the parked vehicle 2. The alarm message is then sent in a possible implementation to a network address of a terminal of the selected closest police station and/or closest security station. In an alternative embodiment, the alarm message generated by the vehicle camera system 3 is transmitted to one or several dedicated network addresses which can be configured by the user. The generated alarm message can be transmitted simultaneously with the generated video image in a video image stream to the selected or configured network address of a terminal. The transmitted video image can comprise real-time video data provided by at least one vehicle camera 4 of the vehicle 2. In a possible embodiment, the monitoring system 1 is remotely activated or deactivated via the wireless link by the master device 5 or by a control terminal device of the user or by a control terminal device of a security or police station terminal. In a possible embodiment, the security service provider may be notified by the monitoring system 1 in response to the alarm message to check the region of interest ROI and to deactivate later the monitoring system 1 if no problematic situation at the region of interest can be verified.

In a further possible embodiment, the master device 5 can activate actuators and/or sensor devices within the region of interest ROI if the received video image shows a suspicious object or person entering the region of interest ROI. For instance, the master device 5 may automatically activate floodlights within the region of interest ROI to improve the visibility and/or to scare off the entering person.

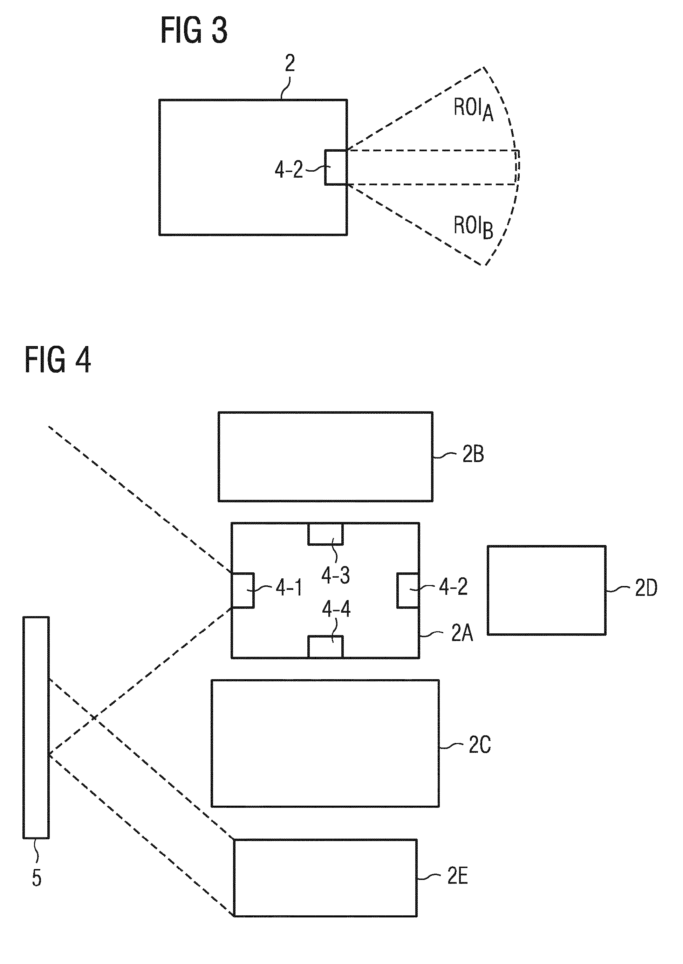

Figs. 2, 3 show exemplary embodiments of the monitoring system 1 according to the present invention. As can be seen in Fig. 2 in the exemplary embodiment, the monitoring system 1 comprises four vehicle cameras of a vehicle 2, i.e. a front camera 4-1, a rear camera 4-2, and two lateral cameras 4-3, 4-4. As can be seen in Fig. 2, by using four different vehicle cameras 4-1, 4-2, 4-3, 4-4, it is possible to monitor different regions of interest ROI in different directions of the vehicle? For instance, a single parked vehicle 2 can be used to monitor four different buildings in four different regions of interest ROI.

As can be seen in Fig. 3, a single camera such as the rear camera 4-2, can be used to monitor different overlapping regions of interest ROI_{A}, ROI_{B}. The vehicle camera 4-i can be moved, for instance by changing or turning its viewing angle. In this way, a single vehicle camera 4-i can monitor different regions of interest ROI as illustrated in Fig. 3.

Fig. 4 shows a further exemplary embodiment of a monitoring system 1 according to the first aspect of the present invention. In the shown embodiment, vehicle 2A comprises four vehicle cameras 4-1, 4-2, 4-3, 4-4 and is used to monitor other vehicles 2B, 2C, 2D in the vicinity of the vehicle 2A and parked on the same parking lot. The exemplary monitoring system 1 as illustrated in Fig. 4 can be used for example by a car dealer to monitor parked vehicles. In the shown exemplary embodiment, the vehicle 2A having the camera 4-4 cannot directly monitor the vehicle 2E parked beside vehicle 2C. In a possible embodiment, a mirror 5 is used to monitor the not directly visible vehicle 2E indirectly by means of the front camera 4-1 as shown in Fig. 4. Accordingly, a vehicle camera of the vehicle camera system 3 can monitor objects in the vicinity of the vehicle directly or by using surfaces reflecting the images of the observed entity. In the exemplary embodiment, the monitoring system 1 comprises only one vehicle 2A having a vehicle camera system 3. The vehicle camera system 3 of vehicle 2A is adapted to process the received camera images and to generate a video image if an object is entering the region of interest ROI, for instance a parking lot where vehicles 2A to 2E are parked. In a possible embodiment, more vehicles can comprise a monitoring system 1 so that several vehicles can monitor each other. This provides the advantage that the vehicles can protect each other against theft by an intruding person.

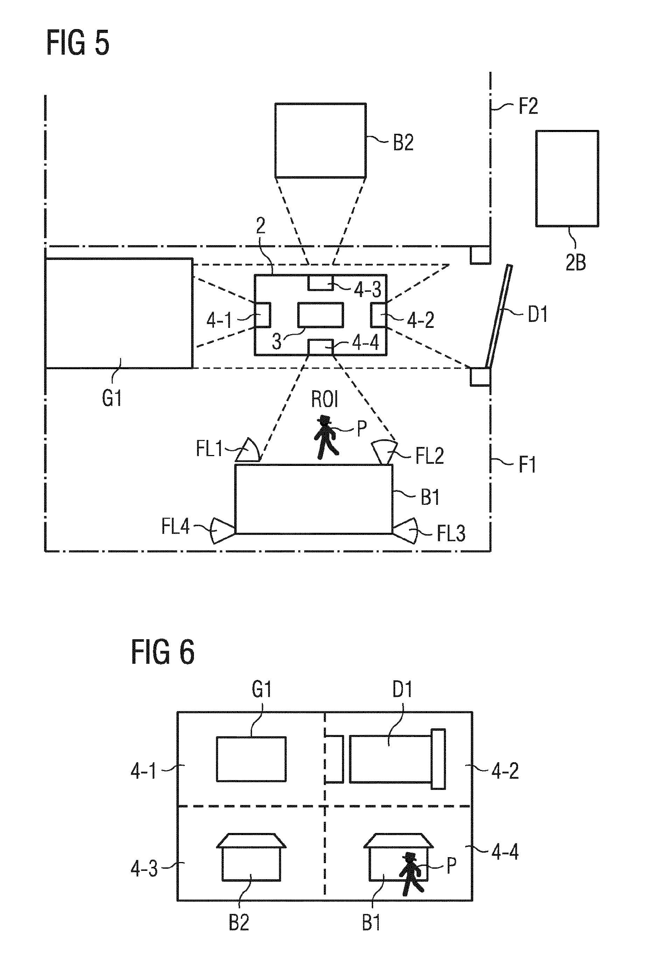

Fig. 5 shows a further exemplary application of a monitoring system 1 according to the first aspect of the present invention. The vehicle 2 comprising a camera system 3 to which four cameras are connteced is parked on a lane in front of a garage G1, wherein the front camera 4-1 monitors the garage G1. The rear camera 4-2 of the vehicle 2 monitors the door entrance D1. The property of the user is fenced by a fence F1. The left camera 4-4 of the vehicle 2 monitors the building B1 of the user. The right camera 4-3 of the vehicle 2 monitors the building B2 of a neighbor surrounded by a fence F2. The car of the neighbor 2B can be parked on the street as illustrated in Fig. 5.

Fig. 6 shows four video images of different observed entities provided by the different video cameras 4-1, 4-2, 4-3, 4-4. The number of the camera 4-i can also be displayed to the user on the display of the master device 5. For instance, a rear camera 4-2 monitors the door entrance D1 to the property of the user. In the shown example, the user can see that the door D1 is partially opened. A person P has entered the region of interest ROI and stands in front of the building B1 as illustrated in Fig. 6. This is captured by vehicle camera 4-4. The two other cameras 4-1, 4-3 do not show any thing which is suspicious. By looking at the video images received from vehicles cameras 4-2, 4-4, the user which may be the owner of building B1 may come to the conclusion that a suspicious person P has entered his property and is most likely a thief. Under these circumstances, the user can decide to trigger an alarm message. The alarm message can in a possible embodiment be sent to the monitoring system 1 implemented in the vehicle 2A, for instance to generate an acoustic alarm signal generated by a horn device of the vehicle 2A. The alarm message can also be transmitted to an intruder alarm system implemented for instance in building B1 to activate floodlights FL1, FL2, FL3, FL4 to improve visibility in the region of interest ROI and/or to scare off the intruding person P. Further, the alarm message can be sent to a terminal of a police or security station located closest to the region of interest ROI, i.e. closest to the address of building B1. Further, the alarm message or an alarm telephone call can be sent to a terminal of a neighbor, for instance living in building B2. In a possible embodiment, the video image provided by the vehicle cameras, such as vehicle cameras 4-4 and 4-2, can be forwarded to a terminal of the neighbor and/or a terminal of a police officer. In a further possible embodiment, actuators provided at the area of interest can be remotely controlled by the master device 5 to take action, for instance a motor closing door D1 to capture person P so that it cannot flee. Accordingly, in a possible embodiment, the monitoring system 1 of the present invention can be used as an intruder alarm system, wherein the intruder alarm system uses the vehicle cameras 4-i of a vehicle 2 parked close to the region of interest ROI.

In a further possible embodiment, the monitoring system 1 according to the first aspect of the present invention is not used as an intruder alarm system, but as a CCTV system. For instance, the rear camera 4-2 of the vehicle 2A, as shown in Fig. 5, can also be used as a camera at an entering door of a property. For instance, if a person such as a visiting person or a friend of the user stands in front of the property and rings the bell, the rear camera 4-2 of the parked vehicle can transmit images of the visiting person to a terminal within the building B1 so that the user can check what person is ringing the bell. Accordingly, the object standing in front of the region of interest ROI or entering the region of interest ROI can be a suspicious person, but also a normal person visiting the user.

The cameras can be connected by Wi-Fi to a PC/tablet app which has a screen that allows the user to determine what is on that screen. The user can zoom in to an area, pan to another area, wherein this zoom/pan can be carried out by the software not actually moving the lenses/camera. The view seen on the screen is then the same as if the user had a normal camera pointing in that direction. Even if the camera is a 190 degree field of view mirror camera pointing towards the ground, the user does not need to see a fish-eye distorted image. The software can correct the fish-eye and perspective, i.e. make the image the same as if a normal camera were used and not a 190 degree fish-eye camera. As well as the user defining the views in this manner, the user can then set up his/her app to show several of these views (from different cameras or another region from the same camera). The user can determine how these views are displayed on the PC/tablet app's screen, e.g. the user can cycle through views with each view displayed for a few seconds, or make for instance a quad display with four views next to each other on the same screen.

In a possible embodiment, the captured video images can be recorded as evidence. In a possible embodiment, the camera images and the generated video image can be stored in a video data memory of the monitoring system 1.

Accordingly, with the monitoring system 1 according to the first aspect of the present invention, vehicle cameras 4-i can be used for an additional wide range of purposes, in particular as part of an intruder alarm system or as part of a CCTV system. The monitoring system 1 works without additional sensors for activating the video camera system 3. The received camera images are processed by the vehicle camera system 3 to detect suspicious objects entering the region of interest ROI. If a suspicious object is detected by evaluating the camera images, a video image is generated and supplied to the master device 5 of the user. By not relying on additional sensors, the complexity of the monitoring system 1 is reduced and the reliability of the monitoring system 1 is increased.

Another application of the monitoring system 1 is the supervision of a crowd of people comprising suspicious persons such as hooligans walking along a predetermined route or street, wherein several cars each equipped with the monitoring system 1 are parked along the observed street. Lateral cameras 4 of the parked vehicles 2 can provide camera images of sections of the route to supervise the complete region of interest formed by the observed street. In this embodiment the monitoring system 1 forms a crowd control system.

## Claims

1. A monitoring system (1) comprising at least one vehicle camera (4) connected to a vehicle camera system (3) of at least one vehicle (2),
wherein said at least one vehicle camera (4) supplies camera images of at least one region of interest (ROI) in the vicinity of said vehicle (2) to said vehicle camera system (3) which is adapted to process the received camera images and to generate a video image if it is detected that an object is entering the region of interest (ROI) on the basis of the processed camera images.

2. The monitoring system according to claim 1,
wherein the vehicle camera system (3) generates an alarm signal if it is detected that a moving object is entering the region of interest (ROI) and/or its movements indicate a suspicious behaviour.

3. The monitoring system according to claim 1,
wherein the generated video image and/or the generated alarm signal is sent by said vehicle camera system (3) to a master device (5) of a user via a wireless link.

4. The monitoring system according to claim 3,
wherein the master device (5) is adapted to control the vehicle cameras (4) via said wireless link.

5. The monitoring system according to claim 4,
wherein the master device (5) is adapted to control a viewing angle and/or a zoom level of the vehicle cameras (4).

6. The monitoring system according to one of the preceding claims 3 to 5,
wherein the master device (5) is connected to a data network.

7. The monitoring system according to one of the preceding claims 1 to 6,
wherein the vehicle (2) is parked in front of a building (B) located in the region of interest (ROI) which is monitored by at least one vehicle camera (4) of said vehicle (2) to detect a person (P) entering the region of interest (ROI).

8. The monitoring system according to one of the preceding claims 2 to 7,
wherein a horn of said vehicle (2) is activated in response to the generated alarm signal to provide an acoustic alarm.

9. The monitoring system according to one of the preceding claims 6 to 8,
wherein in response to the generated alarm signal, an alarm message is transmitted to said master device (5) of the user and to a terminal of a police or security station located close to the region of interest (ROI).

10. The monitoring system according to one of the preceding claims 7 to 9,
wherein the alarm message comprises position data of the current position of the parked vehicle (2) provided by a navigation system of the vehicle (2).

11. The monitoring system according to claim 10
wherein the police or security station closest to the region of interest (ROI) is selected on the basis of the position data of the parked vehicle (2) and the alarm message is sent at least to a network address of a terminal of the selected closest police or security station.

12. The monitoring system according to one of the preceding claims 1 to 11,
wherein the transmitted video image comprises real time video data provided by the vehicle camera (4).

13. The monitoring system according to one of the preceding claims 1 to 12,
wherein the monitoring system (1) is remotely activated or deactivated via said wireless link by the master device (5) or a control terminal device of the user or by a police or security station terminal.

14. A vehicle comprising a monitoring system according to one of the preceding claims 1 to 13.

15. The vehicle according to claim 14,
wherein the vehicle is a car of a user or a police car, a truck or a bus.
